# EUROPÄISCHE PATENTSCHRIFT

(11) **EP 0 921 289 B1**
(45) Veröffentlichungstag und Bekanntmachung des Hinweises auf die Patenterteilung: **30.05.2001**
(21) Anmeldenummer: 98122814.1
(22) Anmeldetag: 01.12.1998
(51) Int. Cl.: F02B 31/08

(54) **Einlasssystem zur Versorgung einer Anzahl von Einlassventilen einer Brennkraftmaschine**
Intake system for the supplying of a number of intake valves for an internal combustion engine
Système d'admission de l'alimentation de plusieurs soupapes d'admission d'un moteur à combustion interne

(30) Priorität: 05.12.1997 DE 19753964
(43) Veröffentlichungstag der Anmeldung: 09.06.1999
(73) Patentinhaber: AUDI AG, 85045 Ingolstadt (DE)
(72) Erfinder: Ottowitz, Alfred, 85084 Reichertshofen (DE)
(74) Vertreter: Krah, Annette

(56) Entgegenhaltungen:
- EP-A- 0 598 699
- US-A- 5 526 789
- PATENT ABSTRACTS OF JAPAN vol. 009, no. 238 (M-416), 25. September 1985 & JP 60 093122 A (YANMAR DIESEL KK), 24. Mai 1985
- PATENT ABSTRACTS OF JAPAN vol. 010, no. 176 (M-491), 20. Juni 1986 & JP 61 025916 A (MAZDA MOTOR CORP), 5. Februar 1986
- PATENT ABSTRACTS OF JAPAN vol. 007, no. 133 (M-221), 10. Juni 1983 & JP 58 048712 A (TOYOTA JIDOSHA KOGYO KK), 22. März 1983
- PATENT ABSTRACTS OF JAPAN vol. 010, no. 253 (M-512), 29. August 1986 & JP 61 079834 A (TOYOTA MOTOR CORP), 23. April 1986
- PATENT ABSTRACTS OF JAPAN vol. 005, no. 162 (M-092), 17. Oktober 1981 & JP 56 088953 A (YAMAHA MOTOR CO LTD), 18. Juli 1981

## Beschreibung

Die vorliegende Erfindung betrifft ein Einlaßsystem zur Versorgung einer Anzahl von Einlaßventilen einer Brennkraftmaschine, das pro Zylinder einen sich verzweigenden Einlaßkanal und wenigstens ein im Einlaßkanal angeordnetes bewegliches, rohrförmig ausgebildetes Schaltelement zur Umlenkung der Einlaßströmung aufweist.

Ein solches Einlaßsystem ist in der Druckschrift JP 60 093 122 A geoffenbart. Dort ist das beweglich angeordnete rohrförmig ausgebildete Schaltelement im Querschnitt kreisförmig und im Bereich seiner Wandung mit einer zusätzlichen Öffnung ausgestattet. Durch eine Drehung des Schaltelements um dessen Längsachse kann diese zusätzliche Öffnung so ausgerichtet werden, dass ein Zweig des sich verzweigenden Einlaßkanals in Abhängigkeit von der Last der Brennkraftmaschine freigegeben oder verschlossen ist. Dabei ist die Geschwindigkeit, mit welcher die Drehung des Schaltelements bzw. die Umschaltung des einen Zweiges erfolgt, jedoch unbefriedigend. Zudem ist dabei die Art der Luftführung - speziell bei der Freigabe des einen Zweiges - aufgrund der durch die zusätzliche Öffnung geschaffenen Abrißkanten mit ganz erheblichen Strömungsverlusten behaftet.

Darüber hinaus ist aus der Druckschrift JP 56 088 953 A ein Einlaßsystem bekannt, wobei das bewegliche Schaltelement als Klappe ausgebildet, im Bereich der Verzweigungsstelle des Einlaßkanals gelagert und zwischen einer Mittelstellung, in der beide Zweige des Einlaßkanals geöffnet sind, und einer Seitenstellung, in der ein Zweig des Einlaßkanals geschlossen und ein Zweig des Einlaßkanals geöffnet ist, hin- und herschwenkbar. Dadurch soll im unteren Lastbereich eine günstigere Verbrennung erreicht werden. Bei diesem Stand der Technik bewirkt das Schaltelement jedoch speziell in der Seitenstellung aufgrund der Querschnittsprünge des Einlaßkanals eine unerwünscht starke Verwirbelung der Einlaßströmung, was zu erheblichen Strömungsverlusten führt.

Vor diesem Hintergrund ist es Aufgabe der vorliegenden Erfindung, ein verbessertes Einlaßsystem zu konzipieren, welches hohe Schaltgeschwindigkeiten ermöglicht und in den verschiedenen Schaltstellungen deutlich geringere Strömungsverluste aufweist und daher auch dazu geeignet ist, um eine wesentlich stärkere Umlenkung der Einlaßströmung zu verwirklichen.

Gelöst wird diese Aufgabe, indem das bewegliche rohrförmige Schaltelement um eine zu seiner Rohrachse senkrecht angeordnete Lagerachse schwenkbar angeordnet ist. Denn dadurch ist das Schaltelement schneller betätigbar und ist für die Einlaßströmung in jeder Schaltstellung des Schaltelements eine weitaus günstigere Geometrie des Einlaßkanals ohne Abrißkanten und ohne Querschnittssprünge geschaffen, so daß sich eine annähernd laminare Einlaßströmung ausbildet und Strömungsverluste verringert sind. Aufgrund der Verringerung der Strömungsverluste kann eine stärkere Umlenkung der Einlaßströmung verwirklicht werden, was innerhalb der Zylinder einer Brennkraftmaschine zu einem besonders ausgeprägten Dralleffekt führt. Dieser besonders ausgeprägte Dralleffekt begünstigt schließlich die Gemischaufbereitung.

Gemäß einer Weiterbildung der Erfindung weist das schwenkbare Schaltelement im Bereich seiner Wandung eine Lagerstelle für die Lagerachse auf. Somit kann das rohrförmige Schaltelement einen der Zweige des Einlaßkanals bilden, ohne daß die Lagerstelle dabei einen Strömungswiderstand darstellt. Weiterbildungsgemäß kann die Lagerstelle am schwenkbaren Schaltelement endständig angeordnet sein.

In einer besonderen Ausführungsform der Erfindung ist die Lagerstelle des schwenkbaren Schaltelements auf einer Scheitellinie zwischen den Zweigen des Einlaßkanals positioniert und ist die sich an die Position der Lagerstelle stromauf anschließende Scheitellinie zwischen den Zweigen des Einlaßkanals zumindest teilweise als feststehende Trennwand ausgebildet.

Schließt wenigstens eines der freien Enden des schwenkbaren Schaltelements zur Lagerstelle radial ab, so ist außerdem gewährleistet, daß in jeder Schaltstellung des schwenkbaren Schaltelements eine Abdichtung zwischen der Verzweigungsstelle des Einlaßkanals und dem Schaltelement bzw. zwischen der Außenwandung des Einlaßkanals und dem Schaltelement geschaffen ist.

Zur Optimierung der Abdichtung sollte die Außenwandung des Einlaßkanals darüber hinaus eine zur Lagerstelle radial ausgebildete Ausbuchtung für wenigstens eines der freien Enden des schwenkbaren Schaltelements aufweisen. In diese Ausbuchtungen können die Enden des Schaltelements einschwenken, damit das schwenkbare Schaltelement in jeder Schaltstellung gegenüber der Außenwandung des Einlaßkanals abgedichtet ist.

Vorteilhaft ist das schwenkbare Schaltelement in mehrere Einzelrohre unterteilt. Durch dieses Merkmal kann die Einlaßströmung innerhalb des rohrförmigen Schaltelements noch besser geführt werden, so daß etwaige Verwirbelungen, die beim Schließen eines der Zweige des Einlaßkanals auftreten können, in eine weiter verbesserte laminare Strömung umgewandelt werden.

Zur Erleichterung der Fertigung sollte außerdem zwischen der Verzweigungsstelle des Einlaßkanals und der Lagerstelle im Einlaßkanal eine Anflanschung vorgesehen sein.

Die vorliegende Erfindung wird unter Bezugnahme auf die nachfolgenden Zeichnungsfiguren näher erläutert. Es zeigen:
- Figur 1: Ein erfindungsgemäßes Einlaßsystem, bei welchem sich das schwenkbare Schaltelement in einer ersten Schaltstellung befindet; und
- Figur 2: das erfindungsgemäße Einlaßsystem aus Figur 1, bei welchem sich das schwenkbare Schaltelement in einer zweiten Schaltstellung befindet.

Das Einlaßsystem zur Versorgung der Einlaßventile einer Brennkraftmaschine weist pro Zylinder 1 einen Einlaßkanal 2 auf, der sich kurz vor zwei nicht näher dargestellten Einlaßventilen der Brennkraftmaschine in einen ersten Zweig 3 und einen zweiten Zweig 3' verzweigt.

Innerhalb des Einlaßkanals 2 ist stromauf der beiden Zweige 3, 3' ein schwenkbares Schaltelement 4 angeordnet, das rohrförmig ausgebildet ist. Bei dieser Anordnung sind sowohl der Einlaßkanal 2 als auch das Schaltelement 4 im Querschnitt jeweils rechteckig ausgebildet.

Das rohrförmige Schaltelement 4 weist im Bereich seiner Wandung 5 eine endständige Lagerstelle 6 auf. Diese Lagerstelle 6 ist auf einer Scheitellinie S zwischen den beiden Zweigen 3, 3' des Einlaßkanals 2 positioniert.

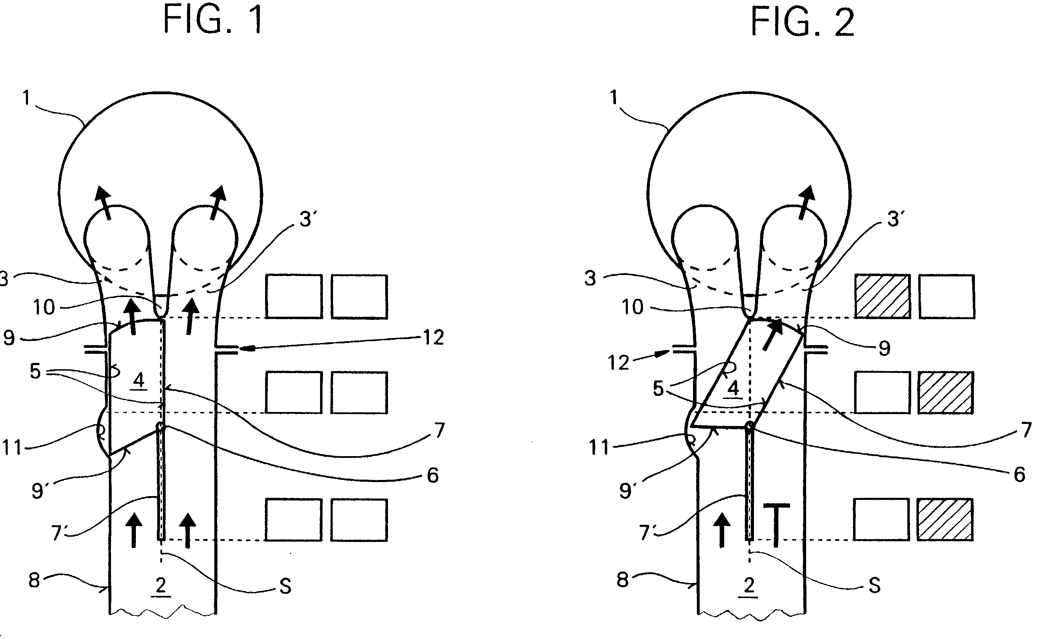

In einer ersten Schaltstellung gemäß Figur 1 sind die beide Zweige 3, 3' des Einlaßkanals 2 geöffnet. Dabei bildet die Wandung 5 des Schaltelements 4 eine bewegliche Trennwand 7 zwischen den beiden Zweigen 3, 3' bzw. liegt die Wandung 5 des Schaltelements 4 an der Außenwandung 8 des Einlaßkanals 2 an. Und in einer zweiten Schaltstellung gemäß Figur 2 ist dagegen der erste Zweig 3 des Einlaßkanals 2 geschlossen und der zweite Zweig 3' des Einlaßkanals 2 geöffnet. Dabei bildet die Wandung 5 lediglich die Begrenzungen des in die Diagonale geschwenkten Schaltelements 4. Zur besseren Veranschaulichung dieser beiden Schaltstellungen sind in beiden Figuren jeweils rechts neben dem Einlaßsystem drei vereinfachte Querschnitte des Einlaßkanals 2 dargestellt, die erkennen lassen, welche Bereiche geöffnet bzw. geschlossen sind. Dabei entsprechen die schraffierten Bereiche den geschlossenen Bereichen des Einlaßkanals 2.

In beiden Figuren ist die sich an die Position der Lagerstelle 6 stromauf anschließende Scheitellinie S zwischen den Zweigen 3, 3' des Einlaßkanals 2 zumindest teilweise als feststehende Trennwand 7' ausgebildet, welche die flexible Trennwand 7 verlängert.

Das stromab gelegene Ende 9 des schwenkbaren Schaltelements 4 ist zur Lagerstelle 6 radial abschließend ausgebildet und schwenkt somit knapp an der Verzweigungsstelle 10 des Einlaßkanals 2 vorbei. Und für das stromauf gelegene Ende 9' des schwenkbaren Schaltelements 4, das schräg abschließend ausgebildet ist, ist in der Außenwandung 8 des Einlaßkanals 2 eine zur Lagerstelle 6 radial ausgebildete Ausbuchtung 11 vorgesehen, in welche das stromauf gelegene Ende 9' einschwenkt.

Zudem weist der Einlaßkanal 2 im Bereich zwischen der Verzweigungsstelle 10 und der Lagerstelle 6 für das Schaltelement 4 eine Anflanschung 12 auf, welche den Übergang von einem Zylinderkopf zu einem Saugrohr darstellt.

Schließlich greift eine nicht dargestellte Schalteinrichtung an der Lagerstelle 6 des schwenkbaren Schaltelements 4 an, so daß das Schaltelement 4 zwischen seiner ersten und seiner zweiten Schaltstellung hin- und herschwenkbar ist.

Die Figuren 1 und 2 zeigen das erfindungsgemäße Einlaßsystem mit einem sich in zwei Zweige 3, 3' verzweigenden Einlaßkanal 2. Es ist jedoch ohne weiteres denkbar auch ein Einlaßsystem mit einem sich in mehr als zwei Zweige verzweigenden Einlaßkanal mit einem schwenkbaren Schaltelement, das rohrförmig ausgebildet ist, auszustatten.

## Patentansprüche

1. Einlaßsystem zur Versorgung einer Anzahl von Einlaßventilen einer Brennkraftmaschine, das pro Zylinder (1) einen sich verzweigenden Einlaßkanal (2) und wenigstens ein im Einlaßkanal (2) beweglich angeordnetes, rohrförmig ausgebildetes Schaltelement (4) zur Umlenkung der Einlaßströmung aufweist,
dadurch gekennzeichnet, daß das bewegliche, rohrförmige Schaltelement (4) um eine zu seiner Rohrachse senkrecht angeordnete Lagerachse schwenkbar angeordnet ist.

2. Einlaßsystem nach Anspruch 1, dadurch gekennzeichnet, daß das schwenkbare Schaltelement (4) im Bereich seiner Wandung (5) eine Lagerstelle (6) für die Lagerachse aufweist.

3. Einlaßsystem nach Anspruch 2, dadurch gekennzeichnet, daß die Lagerstelle (6) am schwenkbaren Schaltelement (4) endständig angeordnet ist.

4. Einlaßsystem nach einem der Ansprüche 2 oder 3, dadurch gekennzeichnet, daß die Lagerstelle (6) des schwenkbaren Schaltelements (4) auf einer Scheitellinie (S) zwischen den Zweigen (3, 3') des Einlaßkanals (2) positioniert ist.

5. Einlaßsystem nach Anspruch 4, dadurch gekennzeichnet, daß die sich an die Position der Lagerstelle (6) stromauf anschließende Scheitellinie (S) zwischen den Zweigen (3, 3') der Einlaßkanäle (2) zumindest teilweise als feststehende Trennwand (7') ausgebildet ist.

6. Einlaßsystem nach einem der Ansprüche 1 bis 5, dadurch gekennzeichnet, daß wenigstens eines der freien Enden (9, 9') des schwenkbaren Schaltelements (4) zur Lagerstelle (6) radial abschließt.

7. Einlaßsystem nach einem der Ansprüche 1 bis 6, dadurch gekennzeichnet, daß die Außenwandung (8) des Einlaßkanals (2) für wenigstens eines der freien Enden (9, 9') des schwenkbaren Schaltelements (4) eine zur Lagerstelle (6) radial ausgebildete Ausbuchtung (11) aufweist.

8. Einlaßsystem nach einem der Ansprüche 1 bis 7, dadurch gekennzeichnet, daß das schwenkbare Schaltelement (4) in mehrere Einzelrohre unterteilt ist.

9. Einlaßsystem nach einem der Ansprüche 1 bis 8, dadurch gekennzeichnet, daß zwischen der Verzweigungsstelle (10) des Einlaßkanals (2) und der Lagerstelle (6) im Einlaßkanals (2) eine Anflanschung (12) vorgesehen ist.

## Claims

1. Intake system for supplying a number of intake valves of an internal combustion engine, said system having for each cylinder (1) a branching inlet port (2) and, arranged so as to be able to move in the inlet port (2), at least one control element (4) of tubular construction for diverting the intake flow,
characterised in that the movable, tubular control element (4) is arranged in a manner that enables it to swivel about a bearing shaft arranged perpendicularly to the tubular axis thereof.

2. Intake system according to claim 1, characterised in that in the region of its wall (5) the swivelling control element (4) has a bearing point (6) for the bearing shaft.

3. Intake system according to claim 2, characterised in that the bearing point (6) is arranged terminally on the swivelling control element (4).

4. Intake system according to either of claims 2 and 3, characterised in that the bearing point (6) of the swivelling control element (4) is positioned along an apex line (S) between the branches (3, 3') of the inlet port (2).

5. Intake system according to claim 4, characterised in that the apex line (S), which is contiguous with the position of the bearing point (6) in an upstream direction, is constructed at least in part as a fixed partition wall (7') between the branches (3, 3') of the inlet ports (2).

6. Intake system according to any of claims 1 to 5, characterised in that at least one of the free ends (9, 9') of the swivelling control element (4) terminates radially to the bearing point (6).

7. Intake system according to any of claims 1 to 6, characterised in that for at least one of the free ends (9, 9') of the swivelling control element (4) the external wall (8) of the inlet port (2) has a bulging portion (11) configured radially to the bearing point (6).

8. Intake system according to any of claims 1 to 7, characterised in that the swivelling control element (4) is divided into a plurality of individual pipes.

9. Intake system according to any of claims 1 to 8, characterised in that a flanged-on portion (12) is provided between the branching point (10) of the inlet port (2) and the bearing point (6) in the inlet port (2).

## Revendications

1. Système d'admission pour l'alimentation de plusieurs soupapes d'admission d'un moteur à combustion interne, présentant, par cylindre (1), un canal d'admission (2) allant en se ramifiant et au moins un élément de commutation (4), susceptible de pivoter, disposé dans le canal d'admission (2), pour assurer la déviation de l'écoulement d'admission,
caractérisé en ce que l'élément de commutation (4) susceptible de pivoter est de configuration tubulaire.

2. Système d'admission selon la revendication 1, caractérisé en ce que l'élément de commutation (4) susceptible de pivoter présente un point de tourillonnement (6) dans la zone de sa paroi (5.

3. Système d'admission selon la revendication 2, caractérisé en ce que le point de tourillonnement (6) est disposé à une extrémité, sur l'élément de commutation (4) susceptible de pivoter.

4. Système d'admission selon l'une des revendications 2 ou 3, caractérisé en ce que le point de tourillonnement (6) de l'élément de commutation (4) susceptible de pivoter est positionné sur la ligne des sommets (S) tracée entre les ramifications (3, 3') du canal d'admission (2.

5. Système d'admission selon la revendication 4, caractérisé en ce que la ligne des sommets, se raccordant en amont à la position du point de tourillonnement (6), entre les chemins de ramification (3, 3') des canaux d'admission (2), est réalisée au moins partiellement sous forme de paroi de séparation (7') fixe.

6. Système d'admission selon l'une des revendications 1 à 5, caractérisé en ce qu'au moins l'une des extrémités libres (9, 9') de l'élément de commutation (4) susceptible de pivoter est fermée radialement par rapport au point de tourillonnement (6.

7. Système d'admission selon l'une des revendications 1 à 6, caractérisé en ce que la paroi extérieure (8) du canal d'admission (2) présente un creusement (11), décrivant un rayon centré au point de tourillonnement (6), pour au moins l'une des extrémités libres (9, 9) de l'élément de commutation (4) susceptible de pivoter.

8. Système d'admission selon l'une des revendications 1 à 7, caractérisé en ce que l'élément de commutation (4) susceptible de pivoter est subdivisé en plusieurs tubes individuels.

9. Système d'admission selon l'une des revendications 1 à 8, caractérisé en ce qu'un montage flasqué est prévu entre le point de ramification (10) du canal d'admission (2) et le point de tourillonnement (6) situé dans le canal d'admission (2.
